# EUROPÄISCHE PATENTANMELDUNG

(11) **EP 4 530 005 A1**
(43) Veröffentlichungstag der Anmeldung: **02.04.2025**
(21) Anmeldenummer: 24000111.5
(22) Anmeldetag: 13.09.2024
(51) Int. Cl.: B23D 21/10, B26D 1/00, B26D 1/26, B26D 5/10, B26D 3/16, B26D 7/00, B26D 7/01, B26D 7/02, H02G 1/12

(54) **SCHNEIDWERKZEUG FÜR WELLSCHLÄUCHE**

(30) Priorität: 27.09.2023 DE 202023002040 U
(71) Anmelder: Flexa GmbH & Co, 63456 Hanau (DE)
(72) Erfinder: Stenger, Markus, D-63456 Hanau (DE); Stenaer, Christoph, D-63456 Hanau (DE); Kuchenbrod, Frank, D-63456 Hanau (DE); Toranin, Nils, D-64823 Groß-Umstadt (DE); Ebert, Jörg, D-64807 Dieburg (DE)

(57) **Zusammenfassung**

Die Erfindung betrifft ein Schneidwerkzeug für Wellschläuche mit einem Grundkörper und mindestens einem darin gehaltenen Messer, wobei der Grundkörper mindestens zwei Teilkörper aufweist, die über ein Gelenk zueinander schwenkbar gehalten sind, und wobei der Grundkörper eine Öffnung zur Aufnahme eines Wellschlauchs aufweist, wobei der Umfang der Öffnung durch eine Mantelfläche in dem einen Teilkörper und eine Mantelfläche in dem anderen Teilkörper begrenzt ist, und wobei an der Mantelfläche mindestens zwei in axialer Richtung zueinander beabstandete und in radialer Richtung verlaufende Stege angeordnet sind, und an der einen und/oder der anderen Mantelfläche, in axialer Richtung gesehen, in den Zwischenraum zwischen den Stegen mindestens ein Messer hineinragt.

## Beschreibung

Die vorliegende Erfindung betrifft ein Schneidwerkzeug für Wellschläuche mit einem Grundkörper und mindestens einem darin gehaltenen Messer.

Wellschläuche sind allgemein bekannt um darin elektrische Kabel und/oder Schläuche zu verlegen, die durch den Wellschlauch gegen äußere Einflüsse geschützt sind.

Es kann erforderlich sein, dass solche Wellschläuche gekürzt werden müssen, obwohl bereits die Kabel und/oder Schläuche darin eingezogen sind. Es treten aber auch Fälle auf, dass der Wellschlauch aufgetrennt werden muss, um darin verlegte Kabel oder Schläuche aus dem Wellschlauch als Abzweigung herauszuführen. Bei der Auftrennung des Wellschlauchs ist darauf zu achten, dass die darin verlegten Kabel und/oder Schläuche nicht beschädigt werden, was ansonsten zu Kurzschlüssen zwischen den elektrischen Kabeln und Leckagen der Schläuche führen kann.

Der vorliegenden Erfindung liegt daher die Aufgabe zugrunde, ein Schneidwerkzeug bereitzustellen, das zum Schneiden von Wellschläuchen, sowohl zum Ablängen als auch zum Auftrennen, geeignet ist und das die vorstehend angegebenen Nachteile vermeidet.

Die Aufgabe wird durch ein Schneidwerkzeug gemäß Anspruch 1 gelöst. Bevorzugte Ausführungsformen ergeben sich aus den abhängigen Ansprüchen.

Das erfindungsgemäße Schneidwerkzeug weist einen Grundkörper mit mindestens einem darin gehaltenen Messer auf. Dieses Messer greift bei der Handhabung des Schneidwerkzeugs in den Wellschlauch ein, um diesen abzulängen oder aufzutrennen. Dieser Grundkörper besitzt mindestens zwei Teilkörper, die über ein Gelenk zueinander schwenkbar gehalten sind. Durch das Gelenk können die mindestens zwei Teilkörper zueinander verschwenkt werden, um eine Öffnung in dem Grundkörper zur Aufnahme eines Wellschlauchs freizugeben. Das Schneidwerkzeug wird dann in diesem geöffneten Zustand um den Wellschlauch herumgelegt und die Teilkörper werden so verschwenkt, dass der Wellschlauch in der Öffnung einliegt und der Umfang des Wellschlauchs durch eine Mantelfläche in dem einen Grundkörper und eine Mantelfläche in dem anderen Grundkörper begrenzt ist. An der Mantelfläche des einen und/oder des anderen Grundkörpers, vorzugsweise an beiden Grundkörpern, befinden sich mindestens zwei in axialer Richtung zueinander beabstandete und in radialer Richtung verlaufende Stege, die sich, wenn die beiden Teilkörper geschlossen sind, von der Außenseite des Wellschlauchs aus gesehen, in zwei benachbarte Wellentäler einlegen. Von der Mantelfläche des einen und/oder des anderen Grundkörpers steht mindestens ein Messer, in axialer Richtung eines Wellschlauchs gesehen, von dem Zwischenraum zwischen den Stegen vor, so dass, in Bezug auf die Außenseite eines Wellschlauchs gesehen, das mindestens eine Messer dann, wenn die zwei Teilkörper des Schneidwerkzeugs um einen Wellschlauch gelegt sind, d. h. die beiden Teilkörper sind geschlossen, in einen Wellenberg zwischen zwei Wellentälern eingreift. Anschließend wird das Schneidwerkzeug gedreht, so dass es um den Wellschlauch rotiert, bis das mindestens eine Messer eine vollständige Umdrehung um 360° durchlaufen hat und der Wellschlauch entlang des Wellenbergs - in Bezug auf die Außenseite des Wellschlauchs - getrennt ist.

Das mindestens eine Messer wird so in dem Schneidwerkzeug justiert, dass es, in radialer Richtung des Wellschlauchs gesehen, nur eine sehr geringe Eindringtiefe in den Wellenberg besitzt, so dass in dem Wellschlauch verlegte Kabel und/oder Schläuche nicht beschädigt werden, die an der Innenfläche des Wellschlauchs und dort, von der Innenseite des Wellschlauchs aus gesehen, an den Stegen bzw. Wellenbergen des Wellschlauchs anliegen.

Die Öffnung wird bevorzugt jeweils hälftig auf die mindestens zwei Teilkörper verteilt. Die Teilkörper können als Kreissegmente oder Ringsegmente aufgebaut werden.

Während der Aufbau des Schneidwerkzeugs aus mindestens zwei Teilkörpern bevorzugt ist, kann das Schneidwerkzeug auch aus mehreren Teilkörpern, schwenkbar zueinander gehalten, aufgebaut sein, so dass ein solches mehrgliedriges Schneidwerkzeug, ähnlich einer Gliederkette, um den Wellschlauch herumgelegt werden kann.

Weiterhin ist es von Vorteil, wenn in den Teilkörpern mindestens drei oder vier Messer vorgesehen sind, die darüber hinaus gleichmäßig um den Umfang der Öffnung verteilt angeordnet sind. Entsprechend der Verteilung der Messer, die aus der Mantelfläche der Öffnung vorstehen, wird der erforderliche Drehradius des Schneidwerkzeugs um den Wellschlauch reduziert. Wenn zwei Messer vorhanden sind, die bei geschlossenem Schneidwerkzeug aus gegenüberliegenden Seiten der Öffnung vorstehen, ist eine Drehung des Schneidwerkzeugs um etwas mehr als 180° ausreichend, um den Wellschlauch zu trennen; diese Drehung kann bei gleichmäßiger Verteilung von drei Messern um den Umfang der Öffnung bzw. Mantelfläche der Öffnung auf 120° oder bei vier Messern auf 90° reduziert werden.

Wie bereits vorstehend erwähnt, werden das/die Messer in den Teilkörpern des Schneidwerkzeug so positioniert, dass sie über die Fläche zwischen den mindestens zwei in axialer Richtung verlaufenden Stege der Teilkörper, in radialer Richtung gesehen, in einer Höhe vorstehen, die gleich oder geringer als die Höhe der Stege ist. Dadurch wird garantiert, dass Kabel und/oder Schläuche, die an der Innenseite eines Wellschlauchs anliegen, nicht durch die Messer bzw. Messerspitzen erreicht werden.

Für eine einfache und austauschbare Anordnung des/der Messer an/in dem/den Teilkörper(n) wird jeweils eine Vertiefung in einer Seitenfläche des einen und/oder anderen Teilkörpers ausgebildet, in die ein jeweiliges Messer eingesetzt und befestigt wird. Eine solche Vertiefung ist so ausgeführt, dass das schneidende Messerende aus der Mantelfläche des Teilkörpers an einer Position vorsteht, die sich zwischen zwei Wellenbergen an der Mantelfläche befindet.

Weitere Einzelheiten und Merkmale der Erfindung ergeben sich aus der nachfolgenden Beschreibung eines Ausführungsbeispiels anhand der Zeichnung. In der Zeichnung zeigt:

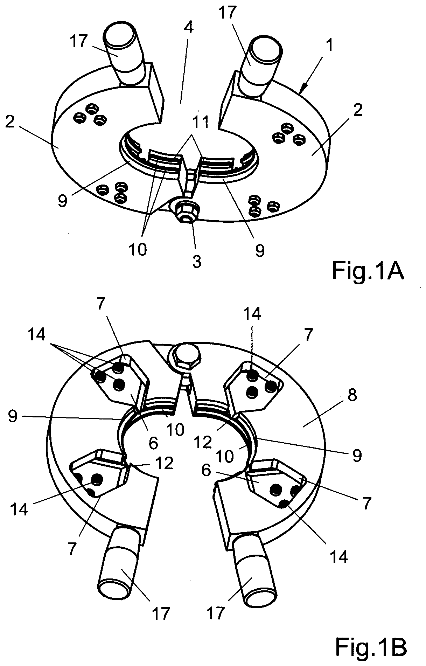

- Figur 1A: eine perspektivische Ansicht auf die eine Seite eines teilweise geöffneten Schneidwerkzeugs,
- Figur 1B: eine perspektivische Ansicht des Schneidwerkzeugs der Figur 1A der anderen Seite,
- Figur 2: das Schneidwerkzeug in einer Ansicht entsprechend Figur 1 B mit einem darin eingelegten Wellschlauch und
- Figur 3: einen Schnitt entlang der Messerebene durch das Schneidwerkzeug

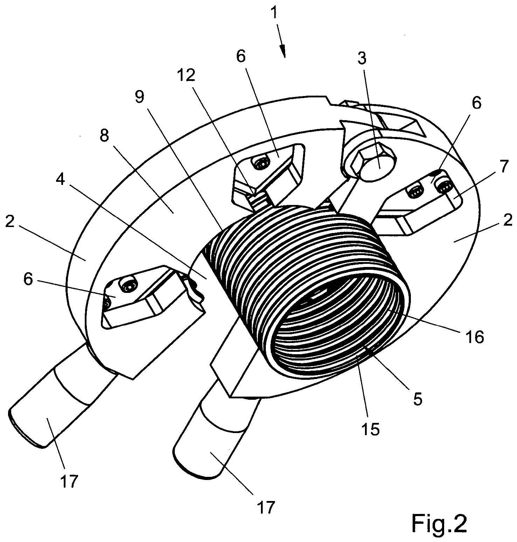

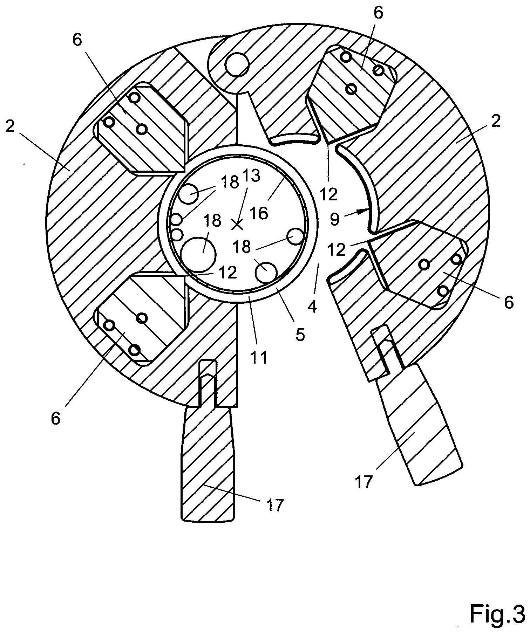

Das in den Figuren dargestellte Schneidwerkzeug umfasst einen Grundkörper 1, der in dem dargestellten Beispiel aus zwei Teilkörpern 2 zusammengesetzt ist. Die beiden Teilkörper 2 sind über ein Gelenk 3, ähnlich eines Scharniers, zueinander schwenkbar gehalten, wobei das Scharnier durch einen Bolzen und eine Mutter gebildet ist. Dadurch können die Teilkörper 2, falls erforderlich, jederzeit zum Austausch voneinander getrennt werden. Diese Verbindung ist so eingestellt, dass sich die beiden Teilkörper 2 ohne großen Widerstand zueinander verschwenken lassen, um die in dem Grundkörper 1 vorhandene Öffnung 4 zugänglich zu machen oder zu schließen, um einen Wellschlauch 5 einzusetzen, wie dies in den Figuren 2 und 3 dargestellt ist.

Sofern nachfolgend eine axiale oder radiale Richtung angegeben wird, so bezieht sich diese Angabe auf die Achse 13 eines in das Schneidwerkzeug eingesetzten Wellschlauchs 5, wie dies aus Figur 3 ersichtlich ist, oder auf die Achse 13 der Öffnung 4.

In die Teilkörper 2 des in den Figuren dargestellten Schneidwerkzeugs sind vier Messer 6 eingesetzt, jeweils zwei Messer in jedem der zwei Teilkörper 2, die, wenn die beiden Teilkörper 2 des Schneidwerkzeugs geschlossen sind, gleichmäßig um den Umfang der Öffnung 4 verteilt sind.

Die Messer sind jeweils in einer Vertiefung 7 in einer der beiden Seitenflächen 8 eingesetzt. Wie den Figuren zu erkennen ist, wird die Öffnung 4 durch jeweils eine Mantelfläche 9 begrenzt. An dieser Mantelfläche 9 sind zwei in axialer Richtung zueinander beabstandete und in radialer Richtung verlaufende Stege 10 angeordnet. In den, in axialer Richtung gesehen, Zwischenraum 11 zwischen den Stegen 10 ragen die Spitzen 12 der jeweiligen Messer 6 hinein.

Die in die Vertiefungen 7 eingesetzten Messer 6, die über Befestigungsmittel, z. B. Schrauben 14, austauschbar gehalten sind, sind mit ihren Spitzen 12 so positioniert, dass deren Spitzen 12 jeweils, in axialer Richtung gesehen, in den Zwischenraum 11 zwischen den Stegen 10 hineinragen. Wie die Figur 3 verdeutlicht, stehen die Spitzen 12 in den Zwischenraum 11 (Wellentäler 15 von der Innenseite eines Wellschlauchs 5 aus gesehen, bei denen es sich von der Außenseite eines Wellschlauchs 5 gesehen um Wellenberge handelt) nur soweit vor, dass sie, in radialer Richtung gesehen, nur aus dem Zwischenraum 11 geringfügig vorstehen, allerdings, in radialer Richtung gesehen, nicht die Höhe von den Zwischenraum 11 in axialer Richtung begrenzenden Wellenberge 16 erreichen.

Zur Handhabung des Schneidwerkzeugs wird in die Öffnung 4, wie in Figur 2 und in Figur 3 dargestellt ist, ein Wellschlauch 5 eingelegt, der, in axialer Richtung gesehen, durch die aus der Mantelfläche 9 in die Öffnung 4 vorstehenden Wellenberge 16 positioniert ist. Anschließend werden die beiden Teilkörper 2 um das Gelenk 3 unter Zuhilfenahme der beiden Griffe 17 an dem jeweiligen Teilkörper 2 geschwenkt, so dass der Wellschlauch 5 vollständig durch die Mantelflächen 9 der beiden Teilkörper 2 umgeben und eingeschlossen ist. Wenn die Spitzen 12 der Messer 6 der Teilkörper 2 die Außenfläche des Wellschlauchs 5 berühren und die Teilkörper 2 weiter in ihrer Endstellung gebracht werden, drücken sich die Spitzen 12 der Messer 6 in das Material des Wellschlauchs 5, und zwar in den entsprechend positionierten Wellenberg, von der Außenseite des Wellschlauchs 5 aus gesehen, hinein. Dann wird das Schneidwerkzeug in radialer Richtung um den Wellschlauch 5 gedreht, so dass der Wellschlauch 5 entlang des Wellenbergs durch die Messer 6 aufgetrennt wird.

Da in dem gezeigten Ausführungsbeispiel vier Messer 6 gleichmäßig um den Umfang der Öffnung 4 des Schneidwerkzeugs, im geschlossenen Zustand, verteilt sind, reicht eine Drehung des Schneidwerkzeugs um etwas mehr als 90° aus, um den Wellschlauch 5 zu trennen.

Insbesondere anhand der Figur 3 ist ersichtlich, dass Kabel und Schläuche 18, die an der Innenfläche des Wellschlauchs 5, und zwar an den an der Innenfläche vorstehenden Wellenbergen 16, anliegen, nicht durch die Messerspitzen 12 beim Schneid- oder Trennvorgang berührt werden.

## Patentansprüche

1. Schneidwerkzeug für Wellschläuche mit einem Grundkörper (1) und mindestens einem darin gehaltenen Messer (6) , **dadurch gekennzeichnet, dass** der Grundkörper (1) mindestens zwei Teilkörper (2) aufweist, die über ein Gelenk (3) zueinander schwenkbar gehalten sind, und der Grundkörper (1) eine Öffnung (4) zur Aufnahme eines Wellschlauchs (5) aufweist, der Umfang der Öffnung (4) durch eine Mantelfläche (9) in dem einen Teilkörper (2) und eine Mantelfläche (9) in dem anderen Teilkörper (2) begrenzt ist, und dass an der Mantelfläche (9) mindestens zwei in axialer Richtung zueinander beabstandete und in radialer Richtung verlaufende Stege (10) angeordnet sind, wobei an der einen und/oder der anderen Mantelfläche (9), in axialer Richtung gesehen, in den Zwischenraum (11) zwischen den Stegen (10) mindestens ein Messer (6) hineinragt.

2. Schneidwerkzeug nach Anspruch 1, **dadurch gekennzeichnet, dass** die Öffnung (4) auf die mindestens zwei Teilkörper (2) hälftig verteilt ist.

3. Schneidwerkzeug nach Anspruch 1 oder 2, **dadurch gekennzeichnet, dass** mindestens drei oder vier Messer (6) vorgesehen sind.

4. Schneidwerkzeug nach Anspruch 1 bis 3, **dadurch gekennzeichnet, dass** die Messer (6) gleichmäßig um den Umfang der Öffnung (4) verteilt angeordnet sind.

5. Schneidwerkzeug nach einem der Ansprüche 1 bis 4, **dadurch gekennzeichnet, dass** das/die Messer (6) über die radiale Fläche zwischen den mindestens zwei in axialer Richtung verlaufenden Stegen (10) in radialer Richtung vorstehen.

6. Schneidwerkzeug nach Anspruch 5, **dadurch gekennzeichnet, dass** das/die Messer (6) über die Fläche zwischen den mindestens zwei in axialer Richtung verlaufenden Stegen (10) in radialer Richtung in einer Höhe vorstehen, die gleich oder geringer als die Höhe der Stege (10) ist.

7. Schneidwerkzeug nach einem der Ansprüche 1 bis 6, **dadurch gekennzeichnet, dass** das/die Messer (6) in jeweils eine Vertiefung (7) einer Seitenfläche (8) des einen und/oder anderen Teilkörpers (2) eingesetzt und befestigt ist/sind.
